# FASCICULE DE BREVET EUROPEEN

(11) **EP 1 408 729 B1**
(45) Date de publication et mention de la délivrance du brevet: **26.10.2016**
(21) Numéro de dépôt: 02737671.4
(22) Date de dépôt: 28.05.2002
(51) Int. Cl.: A01D 34/00

(54) **AMELIORATION D'UNE TONDEUSE ROBOTIQUE**
VERBESSERUNG EINES AUTOMATISCHEN RASENMÄHERS
IMPROVEMENT TO A ROBOTIC LAWNMOWER

(30) Priorité: 28.05.2001 BE 200100361
(43) Date de publication de la demande: 21.04.2004
(73) Titulaire: Husqvarna AB, 561 82 Huskvarna (SE)
(72) Inventeur: COLENS, André, 1330 Rixensart (BE)
(74) Mandataire: Colens, Alain M.G.M.
(86) Numéro de dépôt international: PCT/BE2002/000086
(87) Numéro de publication internationale: WO 2002/096184

(56) Documents cités:
- EP-A- 0 550 473
- EP-A- 0 628 239
- EP-A2- 0 642 732
- DE-A- 2 210 781
- US-A- 3 032 957
- US-A- 3 385 041
- US-A- 4 777 785

## Description

Les tondeuses robotiques de faible puissance mais fonctionnant de manière continue ou quasi continue telles que décrites dans les brevets ou demandes de brevet EP 0 550 473 B1, WO 98/41081, WO 00/60921 présentent des avantages maintenant bien connus: sécurité, légèreté, absence de bruit, absence de ramassage de l'herbe coupée, coût de fabrication réduit.

Ces tondeuses présentent cependant un handicap dû à leur faible puissance et donc à un passage répété sur un endroit donné de la pelouse. Ce désavantage consiste en un écrasement de l'herbe et une tendance du gazon à pousser horizontalement.

Les tondeuses rotatives classiques, plus puissantes, créent un effet d'aspiration qui redressent les brins d'herbe lors de la coupe.

Par ailleurs, les tondeuses cylindriques ont des couteaux hélicoïdaux qui grâce à leur mouvement rotatif redressent l'herbe avant de la couper par cisaillement contre la barre tranchante.

Un autre désavantage rencontré avec la tondeuses robotiques consiste en la formation progressive d'une couche de brins d'herbe coupés formant un tapis, présentant un aspect de feutre, précurseur de formation de mousse.

On a également noté, associé ou non à ce dernier phénomène, la possibilité d'un développement horizontal d'herbe qui ne pourra donc pas être coupé par la tondeuse robotique.

Une première approche a consisté à optimaliser le dispositif de coupe c'est à dire à ajuster les longueurs de lames, l'espace entre le disque de coupe et le disque inférieur de protection, l'inclinaison de la tête de coupe, ainsi que la forme du disque inférieur de protection.

Ces mesures ont amélioré les résultats mais sans résoudre totalement le problème.

Le document EP-A-0 628 239 et le document US 4,777,785 concernent des tondeuses robotiques présentant des éléments (respectivement mécanisme de coupe, éléments de senseur) qui pourraient être aptes à effleurer et à redresser et/ou couper le brins d'herbe aplatis de la pelouse, sans que cela soit efficace, soit un effet reconnu,et encore moins soit le but recherché. Il subsiste donc un besoin pour un dispositif efficace de coupe de brins d'herbe aplatis.

La présente invention concerne un nouveau dispositif conçu dans ce but.

La présente invention a pour but de remédier aux défauts précités des tondeuses robotiques en tirant justement parti de leur passage fréquent.

Selon l'invention, on propose une solution qui s'est avérée très efficace consistant à rajouter à la tondeuse robotique mobile une série d'éléments flexibles dont les extrémités viennent effleurer la surface de la pelouse.

L'effet instantané est peu visible mais le fonctionnement constant de l'engin mobile, combiné à un trajet aléatoire ou à tout le moins dont la direction change fréquemment fait en sorte que les brins d'herbe sont progressivement redressés.

Les éléments flexibles peuvent être constitués d'éléments en fil d'acier disposés en ligne, de préférence transversale par rapport au sens d'avancement de l'engin, sous le châssis de la machine.

Les éléments flexibles peuvent cependant prendre d'autres formes aptes à effleurer et à redresser les brins d'herbe applatis. Il peut ainsi s'agir de tiges en plastique flexible.

On comprendra que l'on peut éventuellement prévoir un mécanisme réglant la hauteur des éléments flexibles, ou d'éléments articulés alternatifs, et donc le degré d'effleurement.

Les éléments peuvent être coupants ou non-coupants. Dans ce dernier cas, il s'agira de préférence d'éléments tranchants dans le sens d'avancement de l'engin.

L'invention apporte ainsi une solution plus efficace au développement de tapis de feutre organique et de mousse, ainsi qu'au développement d'herbe à croissance horizontale.

Selon une configuration, les éléments se présentent sous la forme de lamelles tranchantes articulées dans un plan essentiellement parallèle au sens d'avancement de la tondeuse.

Une autre configuration particulièrement efficace fait appel à une série de ressort hélicoïdaux dont une extrémité est fixée au châssis et l'autre est redressée en forme dans l'axe du ressort, le ressort apportant une élasticité dans le sens vertical, évitant à la machine une perte d'adhérence dans le cas de terrains non parfaitement plans.

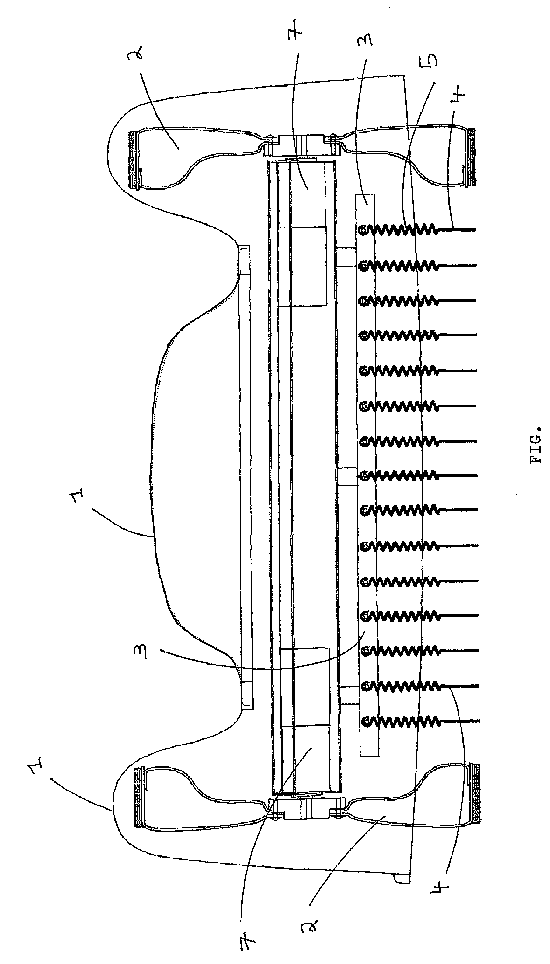

Cette configuration est illustrée dans la figure en annexe qui est une vue en coupe transversale d'une tondeuse robotique montrant un dispositif selon l'invention qui est agencé derrière le dispositif de coupe proprement dit.

On notera la carroserie 1, les roues motrices 2 et les moteurs associés 7, un montant de fixation transversal 3 munie d'une série (ici 15) de tiges 4 verticales s'étendant jusqu'au niveau du sol, chaque tige étant fixée via un ressort hélicoïdal 5 audit montant transversal 3.

La tondeuse peut supporter ou tracter le dispositif portant les éléments flexibles ou articulés. Le dispositif selon l'invention peut être indépendant, en présentant par exemple un châssis indépendant, et peut être séparé et attaché à volonté à l'engin robotique, par exemple sous la forme d'une remorque.

Enfin la tondeuse robotique peut aussi n'être destiné qu'à supporter le dispositif selon l'invention.

## Revendications

1. Tondeuse robotique (1), destinée à se déplacer sur une pelouse, comprenant une série d'éléments (4) dont les extrémités sont aptes à effleurer et à redresser et/ou couper les brins d'herbe applatis de la pelouse **caractérisé en ce que** lesdits éléments sont des fils d'acier flexibles disposés verticalement, des tiges en plastique flexibles, des lamelles tranchantes articulées dans un plan essentiellement parallèle au sens d'avancement de l'engin, ou des ressorts hélicoïdaux (5) dont une extrémité est fixée via un montant au châssis et l'autre est redressée en forme dans l'axe du ressort, lesdits éléments flexibles ou articulés étant situés derrière la ou les têtes de coupe par rapport au sens de déplacement de la tondeuse (1).

2. Tondeuse robotique selon la revendication 1 munie d'une série d'éléments dont les extrémités sont aptes, à effleurer et à redresser les brins d'herbe applatis de la pelouse, simultanément à une opération de tonte.

3. Tondeuse robotique selon n'importe laquelle des revendications précédentes **caractérisée en ce que** les éléments (4) sont disposés en ligne sous le châssis de l'engin.

4. Tondeuse robotique selon n'importe laquelle des revendications précédentes **caractérisée en ce que** les éléments sont non-coupants.

5. Tondeuse robotique selon les revendications 1 à 3 **caractérisée en ce que** les éléments sont coupants.

6. Tondeuse robotique selon la revendication 5 **caractérisée en ce que** les éléments (4) se présentent sous la forme d'éléments tranchants dans le sens d'avancement de l'engin.

## Patentansprüche

1. Mähroboter (1), der dazu bestimmt ist, sich auf einem Rasen zu bewegen, umfassend eine Reihe von Elementen (4), deren Enden in der Lage sind, platt gedrückte Grashalme des Rasens zu berühren und aufzurichten und / oder zu schneiden, wobei es sich bei den besagten Elementen um flexible Stahldrähte, die senkrecht angeordnet sind, flexible Stängel aus Kunststoff, schneidende Lamellen, die auf einer im Wesentlichen parallel zur Vorlaufrichtung des Geräts liegenden Ebene gelenkig ausgebildet sind, oder schraubförmige Feder (5), deren ein Ende über einen Pfosten an dem Chassis befestigt ist, und deren anderes Ende aufgerichtet in der Achse der Feder geformt ist, handelt,
**dadurch gekennzeichnet, dass** die besagten flexiblen oder gelenkig ausgebildeten Elemente, im Verhältnis zu der Fahrrichtung des Gerätes (1), sich hinter dem oder den Scheidekopf / -köpfen befinden.

2. Mähroboter nach dem Anspruch 1, der mit einer Reihe von Elementen versehen ist, deren Enden in der Lage sind, bei einem Mähvorgang gleichzeitig platt gedrückte Grashalme des Rasens zu berühren und aufzurichten.

3. Mähroboter nach irgendeinem der vorangehenden Ansprüche,
**dadurch gekennzeichnet, dass** die Elemente (4) linienförmig unter dem Chassis des Gerätes angeordnet sind.

4. Mähroboter nach irgendeinem der vorangehenden Ansprüche,
**dadurch gekennzeichnet, dass** die Elemente nichtschneidend sind.

5. Mähroboter nach den Ansprüchen 1 bis 3,
**dadurch gekennzeichnet, dass** die Elementen schneidend sind.

6. Mähroboter nach dem Anspruch 5,
**dadurch gekennzeichnet, dass** die Elemente (4) in Form von in Vorlaufrichtung des Gerätes schneidenden Elementen ausgebildet sind.

## Claims

1. Robotic lawnmower (1) intended to move on a lawn **characterized by** its being equipped with a series of elements (4) the ends of which are suitable for touching and for straightening blades of grass flattened in the lawn **Characterized in that** said elements are flexible steel wires mounted vertically, flexible plastic roods, thin sharp plates articulated in a plane essentially parallel to the direction of the displacement of the machine, or helicoïdal springs (5) one end of which is attached to the chassis by a strut and the other end of which is rectified along the spring axis, said flexible or articulated elements being located behind the cutting head or heads with regard to the direction of the displacement of the lawnmower (1).

2. Robotic lawnmower according to claim 1 equipped with a series of elements which extremities are adapted, simultaneously at a mowing operation, to brush and straighten the grass blades flattened on the lawn.

3. Robotic lawnmower according to any of the previous claims **characterized by** the elements being arranged in a line under the chassis of the machine.

4. Robotic lawnmower according to any of the preceding claims in which the elements (4) are non-cutting elements.

5. Robotic lawnmower according to any of the claims 1 to 3 in which the elements (4) are cutting elements.

6. Robotic lawnmower according to claim 5 **characterized in that** the elements are cutting in the direction of displacement.
